# EUROPÄISCHE PATENTSCHRIFT

(11) **EP 0 392 138 B1**
(45) Veröffentlichungstag und Bekanntmachung des Hinweises auf die Patenterteilung: **24.02.1993**
(21) Anmeldenummer: 90100881.3
(22) Anmeldetag: 17.01.1990
(51) Int. Cl.: B23B 29/32, B23Q 17/22

(54) **Verfahren und Vorrichtung zur Verriegelungskontrolle eines Werkzeugrevolvers**
Method and device for locking control of a revolving tool turret
Méthode et dispositif pour contrôler le verouillage d'un tour revolver pour outils

(30) Priorität: 08.04.1989 DE 3911522
(43) Veröffentlichungstag der Anmeldung: 17.10.1990
(73) Patentinhaber: Sauter Feinmechanik GmbH, D-72555 Metzingen (DE)
(72) Erfinder: Sauter, Willy, D-7410 Reutlingen (DE); Thumm, Helmut, Dipl.-Ing. (FH), D-7430 Metzingen (DE); Wahl, Rainer, D-7441 Grafenberg (DE); Widmann, Dieter, D-7441 Neckartenzlingen (DE)
(74) Vertreter: Patentanwälte Bartels und Partner

(56) Entgegenhaltungen:
- EP-A- 192 787
- DE-A- 3 019 666
- DE-A- 3 151 613
- DE-A- 3 311 105

## Beschreibung

Die Erfindung betrifft ein Verfahren zur Verriegelungskontrolle des drehbaren Werkzeugträgers eines Werkzeugrevolvers sowie eine Vorrichtung zu einer solchen Kontrolle.

Bei einem bekannten Werkzeugrevolver (DE-A-30 19 666) ist zur Steuerung der Verriegelung und für den Drehantrieb des Werkzeugträgers eine Steuer- und Mitnahmevorrichtung vorgesehen, die ein bei eingeschaltetem Motor sich drehendes Antriebsrad mit Kupplungszähnen, einen in der einen Drehrichtung vom Antriebsrad mitnehmbaren Schleppring mit einer Steuerkurve und einen mit dem Werkzeugträger drehfest verbundenen Zahnkranz aufweist, der auf der dem Antriebsrad zugekehrten Seite ebenfalls mit Kupplungszähnen versehen ist. Der Kupplungskranz, welcher auf der dem Antriebsrad abgewandten Seite mit einem der Verriegelung des Werkzeugträgers dienenden Zahnkranz versehen ist, ist in axialer Richtung zwischen zwei Stellungen verschiebbar, in denen die Verriegelung des Werkzeugträgers wirksam bzw. unwirksam ist. Die Steuerkurve, die von Rollen des Kupplungskranzes abgetastet wird, hat zwei unterschiedliche Niveaus. Wenn der Werkzeugträger in eine andere Winkelstellung gebracht werden muß, führen zunächst nur das Antriebsrad und der Schleppring eine Drehbewegung aus. Dadurch gelangen die Rollen auf das niedrige Niveau, sobald die Kupplungszähne des Kupplungskranzes in die Zahnlücken zwischen den Kupplungszähnen des Antriebsrades einfallen. Erst jetzt wird bei der weiteren Drehbewegung des Antriebsrades von diesem der Kupplungskranz und von letzterem der Werkzeugträger mitgenommen. Ein Drehgeber mit einem relativ zum Gehäuse des Werkzeugrevolvers unveränderlich angeordneten Näherungsschalter sowie je einem Schaltkörper an einer mit dem Werkzeugträger fest verbundenen Haube in den wählbaren Winkelstellungen erzeugt ein Signal, sobald der Werkzeugträger die gewünschte neue Winkelstellung erreicht hat. Dieses Signal bewirkt einen kurzzeitigen Lauf des Antriebsmotors in der entgegengesetzten Drehrichtung, was dazu führt, daß mit Hilfe der Rollen und der Steuerkurve die Kupplungszähne des Kupplungskranzes aus den Zahnlücken des Antriebstrades ausgehoben werden. Ob am Ende dieser Rückdrehbewegung des Antriebsrades der Kupplungskranz seine Verriegelungsstellung erreicht hat, kann vom Drehgeber nicht kontrolliert werden. Auch andere Kontrollmittel sind hierfür nicht vorhanden. Man kann deshalb nicht ausschließen, daß der Werkzeugträger nicht verriegelt ist, wenn anschließend das sich jetzt in der Arbeitsposition befindende Werkzeug zum Einsatz gebracht wird. Dabei kann es zu erheblichen Schäden kommen.

Der Erfindung liegt die Aufgabe zugrunde, ein einfaches Verfahren zur Verriegelungskontrolle bei einem Werkzeugrevolver zu schaffen, das auch bei einer großen Anzahl von wählbaren Winkelstellungen und hohen Schaltgeschwindigkeiten zuverlässig arbeitet. Diese Aufgabe löst ein Verfahren mit den Merkmalen des Anspruches 1.

Die Erzeugung des Verriegelungskontrollsignales in digitaler Form mit Hilfe des für die Bestimmung der Winkelposition des Werkzeugträgers erforderlichen Drehgebers ergibt nicht nur auch bei hoher Drehgeschwindigkeit und kleinem Winkel zwischen zwei benachbarten wählbaren Winkelstellungen eine zuverlässige Verriegelungskontrolle, sondern es wird auch der Aufwand für die Verriegelungskontrolle erheblich reduziert. Für die Bestimmung der Winkelposition und die Verriegelungskontrolle wird nur noch ein einziges Bauteil, nämlich der Drehgeber, benötigt. Der Näherungsschalter und die ihm gegebenenfalls zugeordnete, aus Schaltnocken und Schleppeinrichtung bestehende Schalteinrichtung entfallen.

Man kann sogar die Kontrollsignale, welche in jeder der wählbaren Winkelstellungen erzeugt werden, als Taktsignale verwenden, und deshalb die normalerweise vorgesehene Taktspur des Drehgebers als die die Kontrollsignale erzeugende Spur ausbilden, wodurch der Drehgeber keine erhöhte Anzahl von Spuren benötigt.

Der Erfindung liegt auch die Aufgabe zugrunde, eine Vorrichtung zur Durchführung des erfindungsgemäßen Verfahrens zu schaffen, die möglichst kostengünstig ausgebildet ist. Diese Aufgabe löst eine Vorrichtung mit den Merkmalen des Anspruches 3.

Der Drehgeber weist vorteilhafterweise für die Erzeugung der Kontrollsignale eine gemäß Anspruch 4 ausgebildete Scheibe auf. Um die seitliche Begrenzung der Fenster in dieser Scheibe genau auf diejenigen Winkelpositionen ausrichten zu können, in denen der Werkzeugträger entriegelt beziehungswiese verriegelt wird, ist bei einer bevorzugten Ausführungsform die Steuerkurve, welche die Entriegelung und Verriegelung bewirkt, gemäß Anspruch 5 ausgebildet.

Um für unterschiedliche Anzahlen von wählbaren Winkelstellungen des Werkzeugträgers nicht unterschiedliche Drehgeber zu benötigen, wird zweckmäßigerweise eine gleichbleibende Fensterbreite gewählt. Von der Zahl der Winkelstellungen ist dann nur der Abstand zwischen zwei benachbarten Fenstern abhängig. Allerdings kann für die doppelte und vierfache Anzahl von Winkelstellungen dieselbe Fensteranordnung verwendet werden. Es ist dann nur bei der vierfachen Anzahl jeder Winkelstellung eines der Fenster zugeordnet, während bei der doppelten Anzahl jedes zweite Fenster auf eine wählbare Winkelstellung ausgerichtet ist. Entsprechend ist bei der kleinsten Anzahl von Winkelstellungen nur jedes vierte Fenster auf eine solche ausgerichtet.

Im folgenden ist die Erfindung anhand von zwei in der Zeichnung dargestellten Ausführungsbeispielen im einzelnen erläutert.

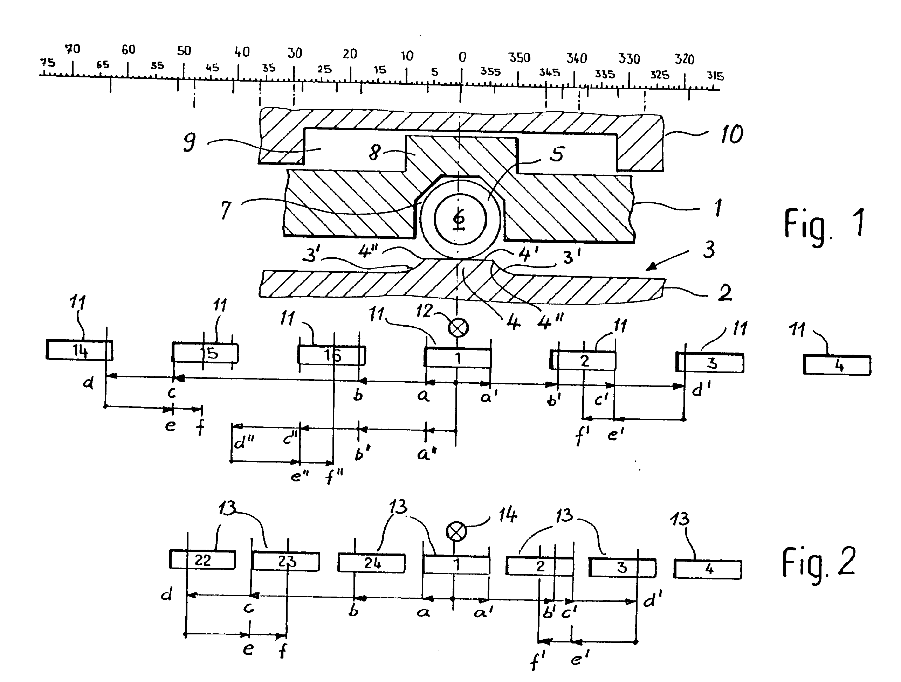

Es zeigen
Fig. 1 in schematischer Darstellung einen unvollständigen Schnitt durch die die Verriegelung des Werkzeugträgers steuernden Bauteile, einen Winkelmaßstab sowie in winkelgerechter Zuordnung einen Teil der für die Erzeugung des Verriegelungskontrollsignals vorgesehenen Fensters des Drehgebers mit zugeordneter Lichtquelle für Ausführungsformen eines Werkzeugrevolvers mit 8 oder 16 wählbaren Winkelstellungen,
Fig. 2 die winkelrichtige Anordnung der Fenster eines Drehgebers bezüglich der in Fig. 1 dargestellten, die Verriegelung und Entriegelung des Werkzeugträgers steuernden Bauteile samt zugehöriger Lichtquelle.

Ein Werkzeugrevolver weist in an sich bekannter Weise an der einen Stirnseite eines Revolvergehäuses einen drehbar gelagerten Werkzeugträger auf, der im Ausführungsbeispiel in 16 unterschiedlichen Winkelstellungen verriegelbar ist, so daß der Winkel zwischen zwei benachbarten Winkelstellungen 22,5° beträgt. Für die genaue Positionierung der gewählten Winkelstellung und die Verriegelung des Werkzeugträgers mit dem Gehäuse sind zwei Zahnkränze vorgesehen, die in der Verriegelungsstellung spielfrei in Eingriff miteinander stehen. Der eine Zahnkranz ist fest mit dem Werkzeugträger verbunden. Der andere Zahnkranz ist undrehbar, aber axial verschiebbar im Revolvergehäuse angeordnet. Der Antrieb des Werkzeugträgers für eine Verdrehung in eine andere Winkelstellung erfolgt, wie ebenfalls bekannt, mittels eines in das Revolvergehäuse eingebauten oder an dieses angeflanschten Elektromotors.

Dieser Elektromotor treibt über ein Getriebe eine im Revolvergehäuse koaxial zur Drehachse des Werkzeugträgers drehbar angeordnete Antriebsscheibe 1 an. Sofern, wie im Ausführungsbeispiel, der Werkzeugträger fest mit dem einen Ende einer Antriebswelle verbunden ist, kann die Antriebsscheibe 1 auf dieser Antriebswelle drehbar angeordnet sein. Wichtig ist jedoch, daß die Antriebsscheibe 1 auch in axialer Richtung relativ zum Werkzeugträger verschiebbar ist, da sie mit einem in axialer Richtung neben ihr angeordneten Steuerkörper 2 zusammenwirkt, welcher auf der der Antriebsscheibe 1 zugekehrten Stirnseite eine Nockenbahn 3 aufweist, die konzentrisch zu der Drehachse des Steuerkörpers 2 verläuft, der drehfest und axial unverschiebbar mit dem Werkzeugträger oder dessen Antriebswelle verbunden ist. Die Nockenbahn 3 ist mit wenigstens zwei gleichmäßig auf dem Umfang verteilt angeordneten Nocken 4 versehen. Die zwischen den Nocken 4 liegenden Abschnitte der Nockenbahn 3 liegen in einer Radialebene. In einer zu dieser Radialebene parallelen, zweiten Radialebene liegt die Stirnfläche 4′ der Nocken 4. Die Erstreckung dieser Stirnfläche 4′ in Umfangsrichtung beträgt im Ausführungsbeispiel 12°, und die Mitte der Stirnfläche 4′ jeder Nocke 4 ist auf eine der für den Werkzeugträger wählbaren Winkelstellungen ausgerichtet.

Wie Fig. 1 zeigt, ist die Stirnfläche 4′ der Nocken 4 in Umfangsrichtung des Steuerkörpers 2 durch je eine Kante 4˝ begrenzt, an die sich je ein ausgerundeterÜbergangsbereich 3′ der Nockenbahn 3 anschließt.

Auf der Nockenbahn 3 läuft eine der Zahl der Nocken 4 entsprechende Anzahl von Rollen 5, welche in einer der Anordnung der Nocken 4 entsprechenden Anordnung auf je einer radialen Achse 6 der Antriebsscheibe 1 drehbar gelagert sind. Wie Fig. 1 zeigt, ist im Ausführungsbeispiel die Antriebsscheibe 1 mit je einer zum Steuerkörper 2 hin offenen Ausnehmung 7 versehen, welche die Rolle 5 unvollständig aufnimmt, um den Abstand der Antriebsscheibe 1 vom Steuerkörper 2 gering zu halten.

In dem die Ausnehmung 7 aufweisenden Abschnitt der Antriebsscheibe 1 ist an dieser auf der dem Steuerkörper 2 abgewandten Seite eine in axialer Richtung vorspringende, im Querschnitt rechteckförmige Klaue 8 vorgesehen, welche in eine im Querschnitt ebenfalls rechteckförmige Nut 9 eines Bauteiles 10 eingreift, das relativ zum Werkzeugträger weder drehbar noch axial verschiebbar ist. Statt das Bauteil 10 fest mit dem Wekzeugträger zu verbinden, könnte deshalb die Nut 9 auch im Werkzeugträger selbst vorgesehen sein.

Der Überstand der Klaue 8 über die dem Steuerkörper 2 abgekehrte Stirnfläche der Antriebsscheibe 1, also die in axialer Richtung gemessene Höhe der Klaue 8 ist größer als die in dieser Richtung gemessene Höhe der Nocken 4, die ihrerseits größer sein muß als die Eingriffstiefe der Zähne der beiden Zahnkränze, mittels deren der Werkzeugträger verriegelbar ist. Wie Fig. 1 zeigt, berühren sich jedoch weder die einander zugewandten Stirnflächen der Antriebsscheibe 1 und des Bauteiles 10, noch die Stirnfläche der Klaue 8 und der zu ihr parallele Grund der Nut 9. Die Abmessung der Klaue 8 in Umfangsrichtung, die im Ausführungsbeispiel 20° beträgt, und die entsprechende Breite der Nut 9, welche im Ausführungsbeispiel 56° beträgt, könnten auch anders gewählt sein. Wesentlich ist nur, daß die Flanke der Klaue 8 bei einer Drehung der Antriebsscheibe relativ zum Bauteil 10 in Umfangsrichtung nach einem vorbestimmten Winkel, der im Ausführungsbeispiel 18° beträgt, in Anlage an die Flanke der Nut 9 kommt.

Der Werkzeugrevolver weist, wie bekannt, einen Drehgeber auf, welcher der Bestimmung der Winkelstellung des Werkzeugträgers dient und sich deshalb zusammen mit diesem in gleichem Maße dreht. Im Gegensatz zu vielen bekannten Werkzeugrevolvern ist also das Übersetzungsverhältnis zwischen dem Drehgeber und dem Werkzeugträger 1:1.

Der Drehgeber kann so ausgebildet sein, daß er die absoluten Positionswerte des Werkzeugträgers erfassen kann, wie dies bei den bekannten Winkelpositionsgebern der Fall ist. Er kann aber auch für eine inkrementale Winkelstellungsmessung ausgebildet sein. In beiden Fällen ist es üblich, eine optisch abtastbare Scheibe zu verwenden. Auch im Ausführungsbeispiel ist eine solche, sich im gleichen Maße wie die Antriebsscheibe 1 drehende Scheibe vorgesehen, die in einer Spur sechzehn Fenster 11 aufweist, deren Mitte auf je eine der sechzehn Winkelstellungen ausgerichtet ist, welche für den Werkzeugträger auswählbar sind. Die Erstreckung der Fenster 11 ist gleich der Erstreckung der Stirnfläche 4′ der Nocken 4 in Umfangsrichtung. Sie beträgt deshalb im Ausführungsbeispiel 12°. Damit erstreckt sich der Zwischenraum zwischen zwei benachbarten Fenstern 11 über 10,5°. Der die Fenster 11 aufweisenden Spur ist eine Lichtschranke zugeordnet, von der nur die im Drehgeber ortsfest angeordnete Lichtquelle 12 dargestellt ist, die einen in Drehrichtung der Scheibe sehr schmalen Lichtstrahl auf die die Fenster 11 aufweisende Spur richtet. Dieser Lichtstrahl kann nur dann auf den nicht dargestellten Empfänger fallen, wenn eines der Fenster 11 den Lichtstrahl freigibt.

Bei einem Winkelpositionsgeber ist die die Fenster 11 aufweisende Spur zusätzlich zu den übrigen Spuren vorhanden. Ist hingegen ein Drehgeber mit inkrementaler Winkelmessung vorgesehen, dann kann die die Fenster 11 aufweisende Spur auch als Taktspur verwendet werden. Zusätzlich ist dann nur noch eine Spur mit der Referenzmarke erforderlich.

Soll der Werkzeugträger aus derjenigen Winkelstellung, welche der Fig. 1 zugrundegelegt ist, in eine um 45° versetzte Winkelstellung gebracht werden, bei der es sich bei acht wählbaren Winkelstellungen um die benachbarte, bei sechzehn wählbaren Winkelstellungen um die übernächste Winkelstellung handelt, und soll die Drehrichtung des Werkzeugträgers einer Verschiebung der Antriebsscheibe 1 nach rechts bei der Blickrichtung gemäß Fig. 1 entsprechen, dann muß zunächst ein nicht dargestellter Vorindexierbolzen mit Hilfe des ihn betätigenden Elektromagneten in seine Freigabestellung zurückgezogen werden. Der Elektromotor wird mit der für die gewünschte Drehbewegung der Antriebsscheibe 1 erforderlichen Drehrichtung eingeschaltet und bewegt zunächst die Rolle 5 bis zur Kante 4′. Da sich die die Fenster 11 tragende Scheibe des Drehgebers in der gleichen Richtung und im gleichen Maße wie die Antriebsscheibe 1 dreht, erreicht der Lichtstrahl der Lichtquelle 12 die mit a gekennzeichnete Position am linken Rand des ersten Fensters 11, wenn die Rolle 5 die rechte Kante 4˝ des Nocken 4 erreicht hat. Bei der weiteren Bewegung gelangt die Rolle 5 auf den Übergangsbereich 3′ der Kurvenbahn 3, wodurch sich die Antriebsscheibe 1 in axialer Richtung gegen den Steuerkörper 2 hin verschiebt und die beiden Zahnkränze außer Eingriff gelangen, so daß der Werkzeugträger nunmehr entriegelt ist. Nachdem der Lichtstrahl durch das sechzehnte Fenster 11 wieder freigegeben worden ist und die Position b erreicht hat, ist die Flanke der Klaue 8 in Anlage an die Flanke der Nut 9 gekommen. Deshalb wird nunmehr das Bauteil 10 und mit ihm zusammen der Werkzeugträger formschlüssig von der Antriebsscheibe 1 mitgenommen. Sobald der Lichtstrahl das fünfzehnte Fenster 11 wieder verläßt und dadurch unterbrochen wird, was in der Position c der Fall ist, wird der den Vorindexierbolzen betätigende Elektromagnet eingeschaltet. Der Vorindexierbolzen. fällt deshalb ein, sobald der Werkzeugträger die neue Winkelposition erreicht hat, was der Fall ist, wenn der Lichtstrahl in der Position d durch das vierzehnte Fenster nach einem Gesamtdrehwinkel der Scheibe von 63° wieder freigegeben worden ist. Nunmehr wird die Drehrichtung des Elektromotors umgekehrt. Der Werkzeugträger bleibt in der vom Vorindexierbolzen ungefähr festgelegten Winkelstellung stehen,
und die Antriebsscheibe 1 wird in der entgegengesetzten Richtung gedreht. Wenn die Rolle 5 am Ende des Übergangsbereiches 3′ die Kante 4˝ Nocken 4 erreicht hat, sind die beiden Zahnkränze wieder vollständig im Eingriff, wodurch der Werkzeugträger durch die Zähne nicht nur verriegelt, sondern auch genau positioniert ist. In dieser Drehstellung der Antriebsscheibe 1 befindet sich der Lichtstrahl wieder am linken Rand des fünfzehnten Fensters 11 in Position e, welche mit der Position c übereinstimmt. Nach einer weiteren Drehung von 6° wird der Elektromotor abgeschaltet, weil nun die Rolle 5 wieder in der Mitte der Stirnfläche 4′ des Nockens 4 steht. Der Lichtstrahl befindet sich jetzt in der Mitte des fünfzehnten Fensters 11 in Position f.

Bei einer Drehung des Werkzeugträgers im entgegengesetzten Sinne in die nächste benachbarte Winkelstellung bei sechzehn wählbaren Winkelstellungen läuft der Vorgang entsprechend ab. In Fig. 1 sind deshalb nur die entsprechenden Positionen a′ bis f′ des Lichtstrahles eingetragen, die dieser bezüglich des ersten bis vierten Fensters 11 dabei einnimmt.

Ferner sind Fig. 1 die entsprechenden Positionen des Lichtstrahles mit a′′ bis f′′ eingetragen, welche für den Fall gelten, daß sechzehn Winkelpositionen wählbar sind und der Werkzeugträger nur um eine Winkelposition verdreht wird.

Sofern der Werkzeugträger in sechs, zwölf oder vierundzwanzig Winkelstellungen verriegelbar ist, wird entweder ein Drehgeber verwendet, welcher anstelle der Spur mit den Fenstern 11 eine Spur mit Fenstern 13 aufweist. Man könnte aber auch einen Winkelgeber verwenden, welcher zusätzlich zu der Spur mit den Fenstern 11 die Spur mit den Fenstern 13 hat und bei dem wahlweise die eine oder andere Spur ausgewählt werden kann.

Die Fenster 13 haben die gleiche Erstreckung in der Drehrichtung der Scheibe, wie die Fenster 11, im Ausführungsbeispiel also eine Erstreckung über 12°. Da vierundzwanzig Fenster 13 vorgesehen sind, beträgt der Abstand zwischen zwei benachbarten Fenstern 3°. Da sonst prinzipiell der Bewegungsablauf gleich ist wie bei dem Ausführungsbeispiel gemäß Fig. 1, sind in Fig. 2 nur für eine Drehung in die übernächste Winkelstellung in der einen Drehrichtung und in die nächste Winkelstellung in der entgegengesetzten Drehrichtung bei 24 wählbaren Winkeleinstellungen die den Drehwinkeln entsprechenden Positionen des Lichtstrahles eingetragen, in denen dieser steht, wenn die Rolle 5 die Stirnfläche 4′ verläßt (Position a und a′), die Mitnahme des Bauteiles 10 durch die Antriebsscheibe 1 beginnt (Position b und b′), der Magnet des Vorindexierbolzens eingeschaltet wird (Position c und c′), der Werkzeugträger die Sollposition erreicht hat, der Vorindexierbolzen einfällt und die Drehrichtungsumkehr eingeleitet wird (Position d und d′), im Reversionsbetrieb die Rolle 5 die Kante 4′′ des Nockens 4 wieder erreicht hat (Position e und e′) und die Reversionsbewegung der Antriebsscheibe 1 beendet wird (Position f und f′).

Da stets am Ende der Reversierbewegung eines der Fenster 11 oder Fenster 13 den Lichtstrahl wieder freigibt, welcher unterbrochen ist, während die Rolle 5 den Übergangsbereich 3′ der Nockenbahn 3 durchläuft, erfährt das Verriegelungskontrollsignal, welches der der Lichtquelle 12 beziehungsweise 14 zugeordnete Empfänger erzeugt, einen Pegelwechsel, der als Kontrollsignal dient. Die Signalverarbeitungselektronik braucht dabei nur die von der Größe des Drehwinkels abhängige Anzahl von Pegelwechseln des Ausgangssignals des Empfängers zu berücksichtigen, um denjenigen Pegelwechsel als Verriegelungskontrollsignal auswerten zu können, welcher auftritt, wenn die Rolle 5 wieder die Stirnfläche 4′ des Nockens 4 erreicht hat.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Verfahren zur Verriegelungskontrolle des drehbaren Werkzeugträgers eines Werkzeugrevolvers, bei dem für eine Drehung des Werkzeugträgers in eine andere der wählbaren, gleichmäßig auf eine volle Umdrehung verteilten Winkelstellungen
a) durch ein Drehen einer Verriegelungssteuervorrichtung in Richtung auf die neue Winkelstellung hin zunächst die Verriegelung des Werkzeugträgers gelöst wird,
b) durch eine Fortsetzung dieser Drehbewegung der Werkzeugträger in die neu Winkelstellung gebracht wird,
c) durch ein anschließendes Drehen der Verriegelungssteuervorrichtung in die entgegengesetzte Drehrichtung der Werkzeugträger wieder verriegelt wird,
d) die Winkelstellung des Werkzeugträgers mittels eines Drehgebers ermittelt wird,
e) der Drehgeber um den gleichen Ninkel wie die Verriegelungsstenervorrichtung gedreht wird,
f) mit Hilfe des Drehgebers digitale Signals erzeugt werden, von denen je eines jeder wählbaren Winkelstellung zugeordnet ist und bei jedem dieser Signale der Pegel in denjenigen beiden Winkelpositionen der Verriegelungssteuervorrichtung geändert wird, in denen sich bei deren Drehbewegung in der einen oder anderen Richtung aus der zugeordneten Winkelstellung heraus und in die zugeordnete Winkelstellung hinein der Verriegelungszustand des Werkzeugträgers ändert,
g) diese Drehgebersignale als Verriegelungskontrollsignale verwendet werden.

2. Verfahren nach Anspruch 1, dadurch gekennzeichnet, daß die den wählbaren Winkelstellungen zugeordneten Drehgebersignale auch als Taktsignal für eine inkrementale Winkelstellungsbestimmung verwendet werden.

3. Vorrichtung zur Kontrolle der Verriegelung des in wählbare, gleichmäßig auf eine rolle Umdrehung verteilte Winkelstellungen drehbaren und in diesen Winkelstellungen Verriegelbaren Werkzeugträgers eines Werkzeugrevolvers, gekennzeichnet durch folgende Merkmale:
a) eine Steuer - und Mitnahmevorrichtung, die einen ersten und einen zweiten getriebenen Teil (2, 10), welche relativ zum Werkzeugträger undrehbar sind, sowie einen bei eingeschalteten Antriebsmotor treibenden Teil (1) aufweist,
b) der treibende Teil (1) ist mit totem Gang in Drehrichtung formschlüssig mit dem ersten getriebenen Teil (10) gekoppelt und in Richtung seiner Drehachse relativ zu den beiden getriebenen Teilen (2, 10) zwischen zwei Stellungen verschiebbar, in denen die Verriegelung des Werkzeugträgers wirksam beziehungsweise unwirksam ist,
c) eine Steuerkurve (3) mit zwei unterschiedlichen Niveaus sowie wenigstens ein der Steuerkurve folgendes Abtastelement (5), welche zum Zwecke der Axialverschiebung des treibenden Teils (1) diesem beziehungsweise dem zweiten getriebenen Teil (2) zugeordnet sind,
d) ein Drehgeber steht mit dem treibenden Teil (1) in einer gleiche Drehwinkel ergebenden Getriebeverbindung,
e) der Drehgeber weist einen Signalgeber (11, 12; 13, 14) für digitale Kontrollsignale auf, von denen je eines mit seiner zwischen den beiden Flanken liegenden Mitte auf die Mitte jeder wählbaren Winkelstellung und mit den beiden Flanken auf diejenigen Winkelpositionen ausgerichtet ist, in denen zum Zwecke des Lösens und Schließens der Verriegelung des Werkzeugträgers die Steuerkurve (3) einen Niveauwechsel aufweist.

4. Vorrichtung nach Anspruch 3, dadurch gekennzeichnet, daß der Drehgeber für die Erzeugung der Kontrollsignale eine Scheibe mit Fenstern (11; 13) aufweist, deren in der Drehrichtung aufeinanderfolgenden Ränder je einen Zustandwechsel einer Lichtschranke bewirken.

5. Vorrichtung nach Anspruch 4, dadurch gekennzeichnet, daß die Steuerkurve (3) an den den Übergang von der wirksamen in die unwirksame Stellung der Verriegelung einleitenden Stellen je eine Kante (4˝) aufweist und der durch die Ränder der Fenster (11; 13) bedingte Zustandswechsel der Lichtschranke in den durch die Kanten 4˝ festgelegten Winkelstellungen erfolgt.

6. Vorrichtung nach Anspruch 5, dadurch gekennzeichnet, daß für unterschiedliche Zahlen von wählbaren Winkelstellungen des Werkzeugträgers die durch den Abstand der beiden Ränder der Fenster festgelegte Fensterbreite bei allen Fenstern (11; 13) gleichgroß ist.

7. Vorrichtung nach Anspruch 6, dadurch gekennzeichnet, daß für die einfache, doppelte und vierfache Anzahl von wählbaren Winkelstellungen die gleiche Scheibe vorgesehen ist.

8. Vorrichtung nach einem der Ansprüche 3 bis 7, dadurch gekennzeichnet, daß die Fenster (11; 13) auch der Erzeugung eines Taktsignales dienen.

## Claims

1. Method for controlling the locking of the rotary tool support of a tool turret, in which for a rotation of the tool support into another of the selectable angular positions distributed uniformly over a full revolution
a) by a rotation of a locking control device in the direction of the new angular position, first of all the locking of the tool support is released,
b) by a continuation of this rotary movement, the tool support is brought into the new angular position,
c) by a subsequent rotation of the locking control device in the opposite direction of rotation, the tool support is once more locked,
d) the angular position of the tool support is ascertained by means of a rotary pick-up,
e) the rotary pick-up is rotated by the same angle as the locking control device,
f) digital signals are produced by means of the rotary pick-up, of which one signal is respectively associated with each selectable angular position and for each of these signals, the level in those two angular positions of the locking control device is varied, at which upon the rotary movement in one or other direction from the associated angular position and into the associated angular position, the locking state of the tool support changes,
g) these rotary pick-up signals are used as locking control signals.

2. Method according to Claim 1, characterised in that the rotary pick-up signals associated with the selectable angular positions are also -used as a timing signal for an incremental angular position determination.

3. Apparatus for controlling the locking of the tool support of a tool turret able to rotate into selectable angular positions distributed uniformly over a full revolution and able to be locked in these angular positions, characterised by the following features:
a) a control and entrainment device, which comprises a first and a second driven part (2, 10), which are not able to rotate relative to the tool support, as well as a driving part (1) operating when the drive motor is switched on,
b) the driving part (1) is positively connected to the first driven quart (10) with lost motion in the direction of rotation and in the direction of its axis of rotation, relative to the two driven parts (2, 10), is able to move between two positions, in which the locking of the tool support is effective respectively ineffective,
c) a control cam (3) with two different levels and at least one follower member (5) following the control cam, which for the purpose of the axial displacement of the driving part (1) are associated with the latter respectively with the second driven part (2),
d) with the driving part (1), a rotary pick-up is in a geared connection producing the same angle of rotation,
e) the rotary pick-up comprises a signal generator (11, 12; 13, 14) for digital control signals, whereof respectively one is aligned by its centre located between the two flanks, with the centre of each selectable angular position and with the two flanks with those angular positions in which, for the purpose of releasing and closing the locking of the tool support, the control cam (3) has a change of level.

4. Apparatus according to Claim 3, characterised in that the rotary pick-up for producing the control signals comprises a disc with windows (11; 13), thereof the edges following each other in the direction of rotation each bring about a change of state of a light barrier.

5. Apparatus according to Claim 4, characterised in that at the points initiating the transition from the effective into the ineffective position of the locking, the control cam (3) respectively comprises an edge (4′′) and the change of state of the light barrier brought about by the edges of the windows (11; 13) takes place in the angular positions determined by the edges (4˝).

6. Apparatus according to Claim 5, characterised in that for different numbers of selectable angular positions of the tool support, the window width fixed by the distance between the two edges of the windows is the same size for all windows (11; 13).

7. Apparatus according to Claim 6, characterised in that the same disc is provided for the single, double and quadruple number of selectable angular positions.

8. Apparatus according to one of Claims 3 to 7, characterised in that the windows (11; 13) also serve for producing a timing signal.

## Revendications

1. Procédé pour contrôler le verrouillage du porte-outils rotatif d'un tour revolver qui comprend, pour faire tourner le porte-outils dans une autre de ses multiples positions angulaires sélectionnables, réparties uniformément le long de tout le pourtour de celui-ci, qui consiste :
a) en faisant tourner un dispositif de commande de verrouillage en direction de la nouvelle position angulaire, à supprimer d'abord le verrouillage du porte-outils;
b) à continuer le mouvement de rotation de façon à amener le porte-outils dans la nouvelle position angulaire voulue;
c) à reverrouiller le porte-outils par une rotation de celui-ci dans la direction opposée;
d) à déterminer la position angulaire du porte-outils au moyen d'un appareil de rotation;
e) à faire tourner l'appareil de rotation d'un angle égal à celui dont on tourne le dispositif de commande de verrouillage;
f) à produire, à l'aide de l'appareil de rotation, des signaux numériques qui se rapportent respectivement à chacune des positions angulaires pouvant être sélectionnées, et à l'apparition de chacun des signaux, dont chacun se rapporte à l'une des positions angulaires pouvant être sélectionnées, et à l'apparition de chacun desquels le niveau de la position angulaire concernée des deux positions angulaires possibles du dispositif de commande de verrouillage est modifiée, positions dans lesquelles, lors d'une rotation dans une direction ou dans l'autre à partir de la position angulaire considérée, et vers la position de verrouillage du porte-outils, l'état de verrouillage du porte-outils subit une modification;
g) à utiliser ces signaux d'indicateur de rotation comme commandes de verrouillage.

2. Procédé selon la revendication 1, caractérisé en ce qu'on utilise aussi les signaux de l'indicateur de rotation correspondant aux positions angulaires sélectionnables comme signaux de cadence pour une détermination par incréments des positions angulaires.

3. Dispositif pour contrôler le verrouillage du porte-outils d'un tour revolver pouvant être tourné dans un certain nombre de positions angulaires sélectionnables, uniformément distribuées sur un tour complet, caractérisé en ce que :
a) il comprend un dispositif de commande et d'entraînement qui comporte une première et une seconde pièces actionnées (2, 10) qui sont relativement non-rotatives par rapport au porte-outils, ainsi qu'une pièce entraînante (1) lorsque le moteur d'actionnement est en marche;
b) la pièce entraînante (1) couplée mécaniquement, avec un certain jeu à vide, dans le sens de la rotation, avec la première partie menée (10) et peut coulisser dans la direction de son axe, par rapport aux deux pièces entraînées (2, 10) entre deux positions dans lesquelles le verrouillage du porte-outils est respectivement, soit effectif, soit inopérant;
c) une came de commande (3) comportant deux niveaux différents et, au moins, un élément palpeur (5) qui analyse ladite came de commande, qui, aux fins de déplacement axial de la pièce entraînante (1), coopère avec celle-ci ou avec la seconde pièce entraînée (2);
d) l'indicateur de rotation est accouplé à la pièce entraînante (1) par un accouplement donnant des angles de rotation similaires,
e) l'indicateur de rotation comporte un générateur de signaux (11, 12, 13, 14) délivrant des signaux de contrôle dont le milieu respectif de chacun, situé entre deux flancs, est aligné avec le milieu de chaque position angulaire sélectionnable et dont les deux flancs sont alignés avec les positions angulaires dans lesquelles, aux fins de la dissolution et du rétablissement du verrouillage du porte-outils, la came de commande (3) présente un changement de niveau.

4. Dispositif selon la revendication 3, caractérisé en ce que l'indicateur de rotation présente, afin de produire les signaux de commande, un disque à fenêtre (11; 13) dont les bords successifs, dans le sens de la rotation, provoquent respectivement un changement d'état d'une barrière photo-électrique.

5. Dispositif selon la revendication 4, caractérisé en ce que la came de commande (3) présente à la transition entre les emplacements déterminant la transition de la position active à la position inactive du verrouillage, respectivement un bord (4˝), et en ce que le changement d'état de la barrière photo-électrique provoqué par les bords des fenêtres (11; 13) a lieu dans les positions angulaires fixées par les bords (4˝).

6. Dispositif selon la revendication 5, caractérisé en ce que, pour des nombres différents de positions angulaires sélectionnables du porte-outils, la largeur des fenêtres déterminée par l'espacement des deux bords de celles-ci, est la même pour toutes les fenêtres (11; 13).

7. Dispositif selon la revendication 6, caractérisé en ce que le même disque est prévu pour un nombre de positions angulaires sélectionnables simple, double ou quadruple.

8. Dispositif selon l'une quelconque des revendications 3 à 7, caractérisé en ce que les fenêtres (11; 13) servent également à produire un signal de cadence.
